# EUROPEAN PATENT APPLICATION

(11) **EP 4 756 964 A1**
(43) Date of publication of application: **10.06.2026**
(21) Application number: 24901106.5
(22) Date of filing: 05.12.2024
(51) Int. Cl.: H01M 10/0565, H01M 50/105, H01M 10/052

(54) **POUCH-TYPE SECONDARY BATTERY AND METHOD FOR MANUFACTURING SAME**

(30) Priority: 06.12.2023 KR 20230176097; 04.12.2024 KR 20240179009
(71) Applicant: LG Energy Solution, Ltd., Seoul 07335 (KR)
(72) Inventor: KANG, Gyung Soo, Daejeon 34122 (KR); OH, Young Ho, Daejeon 34122 (KR); YU, Hyung Kyun, Daejeon 34122 (KR); MAENG, Han Sol, Daejeon 34122 (KR)
(74) Representative: Plasseraud IP
(86) International application number: PCT/KR2024/019885
(87) International publication number: WO 2025/121920

(57) **Abstract**

The present invention relates to a pouch-type secondary battery including an electrode assembly having a structure in which a plurality of electrodes and a plurality of separators are alternately stacked, and including a first electrolyte sheet; an electrolyte band surrounding an outer surface of the electrode assembly such that the stacked structure is fixed; and a battery case accommodating the electrode assembly, wherein the first electrolyte sheet is disposed on a surface of at least one of the plurality of electrodes, and each of the first electrolyte sheet and the electrolyte band includes a first polymer electrolyte.

## Description

### TECHNICAL FIELD

### Cross-reference to Related Applications

This application claims the benefit of Korean Patent Application No. 10-2023-0176097, filed on December 6, 2023, and No. 10-2024-0179009, filed on December 4, 2024 in the Korean Intellectual Property Office, the disclosures of which are incorporated herein in its entirety by reference.

### Technical Field

The present invention relates to a pouch-type secondary battery, and more particularly to a pouch-type secondary battery with improved stability and electrolyte impregnation.

### BACKGROUND ART

With technological development of electric vehicles, mobile devices, and the like, demand for a secondary battery is rapidly increasing as a source of energy. In particular, as the range of areas to which the secondary battery is applied expands to an electric vehicle (EV), a hybrid electric vehicle (HEV), and the like, the secondary battery with stable output and excellent performance is increasingly demanded.

In general, the secondary battery may include an electrode, a separator, and an electrolyte, and the performance of the secondary battery may be determined according to the types of the electrode, the separator, and the electrolyte. The secondary battery may be completely prepared through a wetting process of injecting the electrolyte into a battery case accommodating an electrode assembly and impregnating the electrode assembly with the electrolyte, and through a packaging process of sealing the battery case. At this time, it is important to sufficiently increase the electrolyte impregnation of the electrode assembly. If the electrode assembly of the secondary battery is not sufficiently impregnated with the electrolyte, the capacity of the secondary battery may be reduced, and deterioration of the electrode may be accelerated, causing reduction in lifetime of the secondary battery.

In order to improve the electrolyte impregnation of the electrode assembly, methods of using vacuum, pressurization, etc. are being used, but there is a problem that bubbles are also injected. In addition, due to the bubbles and gas generated during charging and discharging of the secondary battery, a swelling phenomenon may occur in the secondary battery, which causes deterioration of the performance, and due to external impact, etc., there is a risk of fire or explosion. In particular, since the secondary battery having low physical durability, such as a pouch-type secondary battery, is vulnerable to internal gas generation and external impact, technology for improving the electrolyte impregnation of the electrode assembly, without generating bubbles, is required.

### DISCLOSURE OF THE INVENTION

### TECHNICAL PROBLEM

To solve the above-described problems, the first technical task to be solved by the present invention is to provide a pouch-type secondary battery with improved stability of an electrode assembly and improved electrolyte impregnation by applying a polymer electrolyte, capable of melting at a certain temperature or higher, to a surface of an electrode or an outer surface of the electrode assembly.

The second technical task to be solved by the present invention is to provide a preparation method of a pouch-type secondary battery with improved electrolyte impregnation of the electrode assembly and processibility by applying the polymer electrolyte, capable of melting at a certain temperature or higher, to the surface of the electrode or the outer surface of the electrode assembly.

### TECHNICAL SOLUTION

[1] The present invention provides a pouch-type secondary battery including an electrode assembly having a structure in which a plurality of electrodes and a plurality of separators are alternately stacked and containing a first electrolyte sheet; an electrolyte band surrounding an outer surface of the electrode assembly such that the stacked structure is fixed; and a battery case accommodating the electrode assembly, wherein the electrolyte sheet is disposed on a surface of at least one of the plurality of electrodes, and each of the first electrolyte sheet and the electrolyte band includes a first polymer electrolyte.
[2] The present invention provides the pouch-type secondary battery of [1] above, wherein the first polymer electrolyte has a melting point of 60 °C to 73 °C.
[3] The present invention provides the pouch-type secondary battery of [1] or [2] above, wherein the first polymer electrolyte includes polyethylene oxide (PEO).
[4] The present invention provides the pouch-type secondary battery of at least one of [1] to [3] above, wherein the first polymer electrolyte further includes one or more selected from the group consisting of lithium bis(trifluoromethanesulfonyl)imide (LiTFSI) and aluminum oxide (Al₂O₃).
[5] The present invention provides the pouch-type secondary battery of at least one of [1] to [4] above, wherein the electrode assembly further includes a second electrolyte sheet, and the second electrolyte sheet includes a second polymer electrolyte.
[6] The present invention provides the pouch-type secondary battery of [5] above, wherein the second polymer electrolyte has a melting point of 35 °C to 55 °C.
[7] The present invention provides the pouch-type secondary battery of [5] above, wherein the second polymer electrolyte includes a major component containing succinonitrile (SN); and a minor component containing one or more selected from the group consisting of polycarboxylate ether (PCE), polyethylene oxide (PEO), polyvinylpyrrolidone (PVP), polyethylene carbonate (PEC), and polyacrylonitrile (PAN).
[8] The present invention provides the pouch-type secondary battery of at least one of [1] to [7] above, wherein two or more of the electrolyte bands are included, and the two or more electrolyte bands are disposed apart from each other at regular intervals.
[9] The present invention provides the pouch-type secondary battery of at least one of [1] to [8] above, wherein each of the plurality of electrodes includes an electrode current collector and an electrode active material layer applied onto the electrode current collector, and the first electrolyte sheet is positioned on the electrode active material layer.
[10] The present invention provides a preparation method of a pouch-type secondary battery including stacking a plurality of electrodes and a plurality of separators alternately, such that a first electrolyte sheet is stacked on at least one electrode of the plurality of electrodes, to prepare an electrode assembly; fixing the electrode assembly by an electrolyte band; and adding the electrode assembly, fixed by the electrolyte band, and an electrolyte to a battery case and sealing the battery case to obtain an inactive pouch-type secondary battery, wherein each of the first electrolyte sheet and the electrolyte band contains a first polymer electrolyte.
[11] The present invention provides the preparation method of a pouch-type secondary battery of [10] above, wherein the first polymer electrolyte has a melting point of 60 °C to 73 °C.
[12] The present invention provides the preparation method of a pouch-type secondary battery of [10] or [11] above, wherein the preparing of the electrode assembly includes stacking a second electrolyte sheet on at least one electrode of the plurality of electrodes, and the second electrolyte sheet contains a second polymer electrolyte.
[13] The present invention provides the preparation method of a pouch-type secondary battery of [12] above, wherein the second polymer electrolyte has a melting point of 35 °C to 55 °C.
[14] The present invention provides the preparation method of a pouch-type secondary battery of [12] or [13] above, further including activating the inactive pouch-type secondary battery, wherein the activating of the inactive pouch-type secondary battery is to perform charging and discharging of the pouch-type secondary battery at 45 °C to 59 °C.
[15] The present invention provides the preparation method of a pouch-type secondary battery of [14] above, wherein the second electrolyte sheet melts during the activating.

### ADVANTAGEOUS EFFECTS

In a pouch-type secondary battery according to the present invention and a preparation method of the same, since an electrolyte sheet and an electrolyte band, containing a polymer electrolyte capable of melting at a certain temperature or higher, are used, a secondary battery capable of replenishing an electrolyte, decreased during a charging and discharging process of the pouch-type secondary battery, and having improved electrolyte impregnation, is provided.

Effects that may be obtained from example embodiments of the present invention are not limited to the above-mentioned effects, and from the following description, other effects not mentioned herein may be clearly derived and understood by those skilled in the art to which the example embodiments of the present disclosure pertain. That is, unintended effects resulting from carrying out the example embodiments of the present disclosure may also be derived by those skilled in the art from the example embodiments of the present disclosure.

### BRIEF DESCRIPTION OF THE DRAWINGS

FIG. 1 is a perspective view illustrating a pouch-type secondary battery according to the present invention.
FIG. 2 is a drawing illustrating an electrode assembly of a pouch-type secondary battery according to the present invention.

### MODE FOR CARRYING OUT THE INVENTION

It will be understood that terms or words used in the specification and claims shall not be interpreted as the meaning defined in commonly used dictionaries, and it will be further understood that the terms or words should be interpreted as having a meaning that is consistent with their meaning in the context of the relevant art and the technical idea of the invention, based on the principle that an inventor may properly define the meaning of the terms or words to best explain the invention.

In this specification, an "electrolyte sheet" and an "electrolyte band" includes materials each functioning as an electrolyte of a secondary battery by the component thereof, for example, polymer electrolytes, which means that the shapes thereof are a sheet type and a band type, respectively, maintaining a solid state at room temperature.

In this specification, the "polymer electrolyte" remains solid at room temperature and may be molded into the shape of sheet or band, and may refer to a material having a phase transition into liquid or gel, changing into a non-shape state, at a melting temperature (Tm) or higher, and the polymer electrolyte may also be referred to as a solid polymer electrolyte (SPF) or a solid electrolyte.

It will be further understood that the terms 'include', 'provide', 'have', or the like, when used in this specification, specify the presence of stated features, integers, steps, elements, or a combination thereof, but do not preclude the presence or addition of one or more other features, integers, steps, elements, or a combination thereof.

Phrases such as "A or B", "at least one among A and B", "at least one of A or B", "A, B, or C", "at least one among A, B, and C", and "at least one of A, B, or C" may each include any one of the items listed together in the corresponding phrase, among the phrases, or any possible combination thereof.

Terms such as "first" or "second" may be used simply to distinguish one component from another, and do not limit the components in other respects (e.g. importance or order).

Hereinafter, the present invention will be described in detail.

A pouch-type secondary battery according to the present invention may include at least one of components disclosed below, and may include any combination of components, technically possible, among the components below.

The pouch-type secondary battery according to the present invention includes an electrode assembly having a structure in which a plurality of electrodes and a plurality of separators are alternately stacked and containing a first electrolyte sheet; an electrolyte band surrounding an outer surface of the electrode assembly such that the stacked structure of the electrode assembly is fixed; and a battery case accommodating the electrode assembly, the electrolyte sheet is disposed on a surface of at least one of the plurality of electrodes, and each of the first electrolyte sheet and the electrolyte band includes a first polymer electrolyte (solid polymer electrolyte; SPE).

The pouch-type secondary battery according to the present invention is to improve performance of the secondary battery by applying a polymer electrolyte, capable of melting at a certain temperature or higher, in the form of an electrolyte sheet or electrolyte band to be included in the electrode assembly. In particular, since the first polymer electrolyte, which may exist in solid even after a formation process but melt during operation of the secondary battery, is applied to the first electrolyte sheet and electrolyte band, the electrolyte, decreased during charging and discharging of the secondary battery, may be replenished, so that the secondary battery with stable output performance may be achieved.

In addition, the electrode assembly of the pouch-type secondary battery, according to the present invention, may further include a second electrolyte sheet, and the second electrolyte sheet may include a second polymer electrolyte. The second electrolyte sheet, including the second polymer electrolyte, may melt during a formation process, and thus the electrode assembly with excellent electrolyte impregnation may be achieved.

Accordingly, in case of using the electrolyte band and electrolyte sheet as a means of replenishment or impregnation of electrolyte during a formation process or charging and discharging of the secondary battery, the replenishment or impregnation of electrolyte may be possible both inside and outside of the electrode assembly, and the electrolyte may thus be impregnated and provided uniformly on the whole, so that it may be expected to achieve stable performance.

Hereinafter, the present invention is described in detail with reference to the accompanying drawings.

### <Pouch-type Secondary Battery>

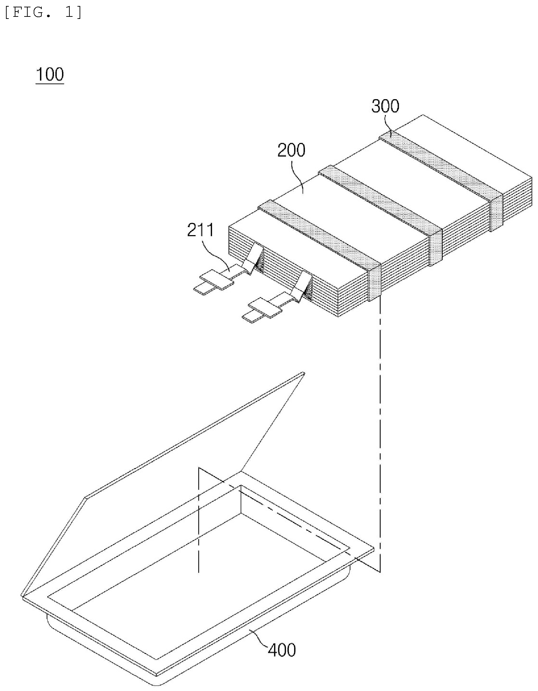

FIG. 1 is a perspective view illustrating a pouch-type secondary battery 100 according to the present invention.

Referring to FIG. 1, the pouch-type secondary battery 100, according to the present invention, includes an electrode assembly 200 and a battery case 400. The structure of the electrode assembly 200 may not be particularly limited, and for example a jelly-roll type, a stack type, or a stack/folding type structure may be included.

The battery case 400 may be a pouch-type container made of a metal material, and for example, aluminum or an aluminum alloy may be included. The battery case 400 may be sealed in a state where the electrode assembly 200 is accommodated such that a part of an electrode lead 211, which is a terminal part, is exposed.

The pouch-type secondary battery 100 includes an electrolyte band 300 surrounding an outer surface of the electrode assembly 200. Two or more of the electrolyte band 300 may be provided, and the two or more electrolyte bands 300 may be disposed apart from each other at regular intervals. The electrolyte band 300 may fix the stacked structure of the electrode assembly 200. In particular, the electrolyte band 300 may surround the outer surface of the electrode assembly 200 such that the electrode assembly 200 may maintain the stacked structure before accommodated in the battery case 400. That is, the electrolyte band 300 may serve to maintain the stacked structure of the electrode assembly 200 stably until the electrode assembly 200 is accommodated in the battery case 400 and the battery case 400 is sealed. Therefore, the ease of assembly and structural stability of the pouch-type secondary battery 100 may be improved.

In addition, the electrolyte band 300 includes a first polymer electrolyte (solid polymer electrolyte; SPE). The first polymer electrolyte may be an electrolyte capable of melting at a certain temperature or higher, and the first polymer electrolyte may melt during operation of the secondary battery. For example, the first polymer electrolyte may exist in a band shape in a state where a preparation of the pouch-type secondary battery has completed, but it may be melting once the internal temperature reaches a certain level or higher during the operation of the secondary battery. Through this, the electrolyte, decreased due to charging and discharging of the secondary battery, may be replenished, and the output performance of the secondary battery may be stably maintained.

According to another embodiment of the present invention, a battery module including the pouch-type secondary battery 100 as a unit cell, and a battery pack including the battery module may be provided. Since the battery module and the battery pack include the secondary battery having high capacity, high rate capability, and high cycle characteristics, the battery module and the battery pack may be used as a power source of a medium and large-sized device selected from the group consisting of an electric vehicle, a hybrid electric vehicle, a plug-in hybrid electric vehicle, and a system for power storage.

### Electrode Assembly

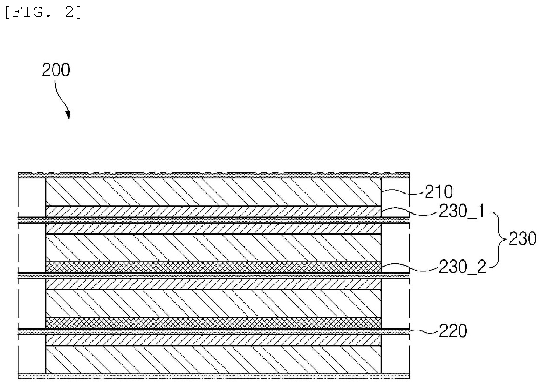

FIG. 2 is a drawing illustrating an electrode assembly 200 according to the present invention.

Referring to FIG. 2, the electrode assembly 200 according to the present invention has a structure in which a plurality of electrodes 210 and a plurality of separators 220 are alternately stacked, and the electrode assembly includes a first electrolyte sheet. In addition, the electrode assembly may include one or more electrolyte sheet 230 selected from the group consisting of a first electrolyte sheet 230_1 and a second electrolyte sheet 230_2.

In addition, the electrolyte sheet 230 is disposed on a surface of at least one of the electrodes 210. That is, each of the first electrolyte sheet 230_1 and the second electrolyte sheet 230_2 is disposed on a surface of at least one of the electrodes 210.

Meanwhile, the order in which the first electrolyte sheet 230_1 and the second electrolyte sheet 230_2 are stacked in the electrode assembly 200 is not particularly limited. In example embodiments, the electrode assembly 200 may have a stacked structure in the order of the separator 220, the first electrolyte sheet 230_1, the electrode 210, the second electrolyte sheet 230_2, and the separator 220. In example embodiments, the electrode assembly 200 may have a stacked structure in the order of the separator 220, the first electrolyte sheet 230_1, the electrode 210, and the separator 220. In example embodiments, the electrode assembly 200 may have a stacked structure in the order of the separator, the electrode 210, the second electrolyte sheet 230_2, and the separator 220.

The first electrolyte sheet 230_1 and the second electrolyte sheet 230_2 may include a polymer electrolyte which may melt at a certain temperature or higher. In particular, the first electrolyte sheet 230_1 may include a first polymer electrolyte, and the second electrolyte sheet 230_2 may include a second polymer electrolyte. By applying the first polymer electrolyte and the second polymer electrolyte, having different melting points, to the electrode assembly 200, the timing at which the first electrolyte sheet 230_1 and the second electrolyte sheet 230_2 impregnate the electrode assembly 200 may be adjusted differently.

### Electrolyte Sheet

Referring to FIG. 2, the electrolyte sheet 230 may be positioned between the electrode 210 and the separator 220. In particular, each of the plurality of electrodes 210 may include an electrode current collector (not shown) and an electrode active material layer (not shown) applied onto the electrode current collector, and the electrolyte sheet 230 may be positioned on the electrode active material layer.

The shape of the electrolyte sheet 230 is not limited as long as it has a structure stackable together with the plurality of electrodes 210 and the plurality of separators 220. For example, the electrolyte sheet 230 may have a rectangular, circular, oval, or square shape.

The electrolyte sheet 230 is classified into the first electrolyte sheet 230_1 and the second electrolyte sheet 230_2 having different melting points.

### (1) First Electrolyte Sheet

The first electrolyte sheet 230_1 according to the present invention includes a first polymer electrolyte. The first polymer electrolyte may include polyethylene oxide (PEO), and may preferably include polyethylene oxide (PEO); and one or more selected from the group consisting of lithium bis(trifluoromethanesulfonyl)imide (LiTFSI) and aluminum oxide (Al₂O₃). When polyethylene oxide (PEO) having a melting point of about 75 °C is used alone as the first polymer electrolyte, the first electrolyte sheet may not melt at a temperature at which a secondary batter normally operates. Accordingly, by mixing lithium bis(trifluoromethanesulfonyl)imide (LiTFSI) or aluminum oxide (Al₂O₃) in the polyethylene oxide (PEO), the first electrolyte sheet 230_1 including the first polymer electrolyte may melt during the operation of the secondary battery. Therefore, the electrolyte may be replenished to the electrode assembly 200, the electrolyte impregnation may be improved, and the pouch-type secondary battery 100 with excellent performance may be achieved.

In particular, the first polymer electrolyte may include the polyethylene oxide (PEO) and the lithium bis(trifluoromethanesulfonyl)imide (LiTFSI) in a weight ratio of 40:1 to 80:1, and preferably of 40:1 to 60:1. Lithium bis(trifluoromethanesulfonyl)imide (LiTFSI) may change the structure of polyethylene oxide (PEO) from crystalline to amorphous, and accordingly, the melting point of the first polymer electrolyte may be lowered. When the weight ratio of the polyethylene oxide (PFO) and the lithium bis(trifluoromethanesulfonyl)imide (LiTFSI) falls within the above ranges, the first electrolyte sheet may not melt during a process of preparing the pouch-type secondary battery 100, and may melt during the operation of the pouch-type secondary battery 100.

In addition, the melting point of the first polymer electrolyte may be 60 °C to 73 °C, preferably 60 °C to 70 °C, and more preferably 60 °C to 66 °C. When the melting point of the first polymer electrolyte is lower than 60 °C, the first electrolyte sheet may all melt during the process of preparing the pouch-type secondary battery 100, and may not maintain its sheet shape after the pouch-type secondary battery 100 is complete. On the contrary, when the melting point of the first polymer electrolyte is higher than 73 °C, the first electrolyte sheet 230_1 may not melt in the range of temperatures at which the pouch-type secondary battery 100 normally operates. and may not serve to replenish the electrolyte. Accordingly, the melting point of the first polymer electrolyte may be, preferably, 60 °C or higher, 61 °C or higher, or 62 °C or higher, and the melting point of the first polymer electrolyte may be 73 °C or lower, 71 °C or lower, 70 °C or lower, 68 °C or lower, or 66 °C or lower.

By including the first polymer electrolyte, the first electrolyte sheet 230_1 may partially melt during a formation process of the pouch-type secondary battery 100, and the rest may melt during the operation. That is, the first electrolyte sheet 230_1 may be positioned between the electrode 210 and the separator 220 when the preparation of the pouch-type secondary battery 100 is complete.

### (2) Second Electrolyte Sheet

The second electrolyte sheet 230_2 according to the present invention includes a second polymer electrolyte. The second polymer electrolyte may include a major component containing succinonitrile (SN); and a minor component containing one or more selected from the group consisting of polycarboxylate ether (PCE), polyethylene oxide (PEO), polyvinylpyrrolidone (PVP), polyethylene carbonate (PEC), and polyacrylonitrile (PAN). In example embodiments, the second polymer electrolyte may include, as a minor component, a combination of polycarboxylate ether (PCE) and polyethylene oxide (PEO), a combination of polycarboxylate ether (PCE) and polyvinylpyrrolidone (PVP), a combination of polycarboxylate ether (PCE) and polyethylene carbonate (PEC), or a combination of polycarboxylate ether (PCE) and polyacrylonitrile (PAN).

In example embodiments, a molecular weight of the polycarboxylate ether (PCE) may be about 165 g/mol, a molecular weight of the polyethylene oxide (PEO) may be about 100 g/mol, and a molecular weight of the polyvinylpyrrolidone (PVP) may be about 25 g/mol.

A melting point of the second polymer electrolyte may be 35 °C to 55 °C, preferably 35 °C to 52 °C, and more preferably 42 °C to 52°C. The second polymer electrolyte may melt during a process of preparing the pouch-type secondary battery 100, and after the second polymer electrolyte has melted during the process, it may be impregnated into an electrode, a separator, and the like in the electrode assembly and may not return to its original state even if the temperature is lowered again, and therefore, the electrolyte impregnation of the pouch-type secondary battery 100 may be improved during the preparation process. Accordingly, the melting point of the second polymer electrolyte may be, preferably, 35 °C or higher, 37 °C or higher, 40 °C or higher, or 42 °C or higher, and the melting point of the second polymer electrolyte may be 55 °C or lower, 53 °C or lower, 52 °C or lower, 50 °C or lower, or 48 °C or lower.

That is, by including the second polymer electrolyte, the second electrolyte sheet 230_2 may melt during a formation process of the pouch-type secondary battery 100, and therefore, the pouch-type secondary battery 100 with improved electrolyte impregnation may be achieved.

### Electrolyte Band

The electrolyte band 300 according to the present invention may surround an outer surface of the electrode assembly 200 such that a stacked structure of the electrode assembly 200 is fixed. The shape of the electrolyte band 300 is not limited as long as it may fix the electrode assembly 200.

Meanwhile, the electrolyte band 300 may include the first polymer electrolyte. The content of the first polymer electrolyte overlaps with what is previously described for the first electrolyte sheet 230_1, and thus is omitted.

The electrolyte band 300 may partially melt during a formation process of the pouch-type secondary battery 100, and the rest may melt during operation of the pouch-type secondary battery 100. The electrolyte band 300 may stably fix the structure of the electrode assembly 200 before the electrode assembly 200 is accommodated in the battery case 400, and may provide the electrolyte to the electrode assembly 200 after the electrode assembly 200 is accommodated in the battery case 400. Accordingly, the pouch-type secondary battery 100 with improved processibility and electrolyte impregnation may be achieved.

### Electrode

The electrodes 210 according to the present invention may each include an electrode current collector (not shown) and an electrode active material layer (not shown) applied onto the electrode current collector. The electrodes 210 may be classified into a positive electrode and a negative electrode.

### (1) Positive Electrode

The positive electrode may have a structure in which a positive electrode active material layer is formed on a positive electrode current collector. The positive electrode current collector is not particularly limited as long as it does not cause chemical change to a battery and has conductivity, and for example, stainless-steel, aluminum, nickel, titanium, calcined carbon, aluminum or stainless-steel that is surface-treated with carbon, nickel, titanium, silver, etc. may be used.

The positive electrode active material layer includes a positive electrode active material, a positive electrode conductive material, and a positive electrode binder. The positive electrode active material may be a positive electrode active material that is generally used. In particular, the positive electrode active material may include a layered compound including lithium cobalt oxide (LiCoO₂), lithium nickel oxide (LiNiO₂), etc., or a compound substituted with one or more transition metals; a lithium iron oxide such as LiFe₃O₄; a lithium manganese oxide represented by chemical formulas such as Li₁₊ₐ₁Mn₂₋ₐ₁O₄ (0≤a1≤0.33), LiMnO₃, LiMn₂O₃, and LiMnO₂; lithium copper oxide (Li₂CuO₂); a vanadium oxide including LiV₃O₈, V₂O₅, Cu₂V₂O₇, etc.; Ni-rich layered lithium nickel oxide represented by chemical formula LiNi₁-a₂Mc₂O₂ (where, M is at least any one selected from the group consisting of Co, Mn, Al, Cu, Fe, Mg, B, and Ga, and 0.01≤a2≤0.3 is satisfied.); a lithium manganese composite oxide represented by chemical formula LiMn₂₋ₐ₃M_{c3}O₂ (where, M is at least any one selected from the group consisting of Co, Ni, Fe, Cr, Zn, and Ta, and 0.01≤a3≤0.1 is satisfied.) or Li₂Mn₃MO₈ (where, M is at least any one selected from the group consisting of Fe, Co. Ni, Cu, and Zn); and LiMn₂O₄ where some Li are substituted with alkaline earth metal ions, but an embodiment of the present invention is not limited thereto. The positive electrode may also be a Li-metal.

The positive electrode conductive material is used to provide conductivity to an electrode, and any material may be used in a battery, without particular limitation, as long as it does not cause chemical change and conducts electrons. Specific examples may be graphite such as natural graphite or artificial graphite; a carbon-based material including carbon black, acetylene black, ketjen black, channel black, furnace black, lamp black, thermal black, a carbon fiber, a carbon nanotube, etc.; a powder or fiber of metal including copper, nickel, aluminum, silver, etc.; a conductive whisker including zinc oxide, potassium titanate, etc.; a conductive metal oxide including titanium oxide, etc.; or a conductive polymer including a polyphenylene derivative, etc., and any one alone or a mixture of two or more thereof may be used.

Next, the positive electrode binder may serve to improve binding between positive electrode active material particles and adhesion between the positive electrode active material and the positive electrode current collector. Specific examples may include polyvinylidene fluoride (PVDF), a vinylidene fluoride-hexafluoropropylene copolymer (PVDF-co-HFP), polyvinylalcohol, polyacrylonitrile, carboxy methyl cellulose (CMC), starch, hydroxypropyl cellulose, regenerated cellulose, polyvinylpyrrolidone, polytetrafluoroethylene, polyethylene, polypropylene, an ethylene-propylene-diene monomer rubber (EPDM rubber), a sulfonated-EPDM, a styrenebutadiene rubber (SBR), a fluorine rubber, or various copolymers thereof, and any one alone or a mixture of two or more thereof may be used.

The positive electrode may be prepared according to a general method of preparing a positive electrode. For example, the positive electrode active material, and the positive electrode binder and/or positive electrode conductive material may be mixed in a positive electrode slurry solvent to prepare a positive electrode slurry, and the positive electrode slurry may be applied onto the positive electrode current collector, and then dried and pressed to prepare the positive electrode current collector in which the positive electrode active material layer 222 is formed.

Meanwhile, the positive electrode slurry solvent may be solvents generally used in the relevant art, for example, dimethyl sulfoxide (DMSO), isopropyl alcohol, N-methylpyrrolidone (NMP), acetone, water, etc. may be used alone or as a mixture of two or more thereof.

### (2) Negative Electrode

The negative electrode may have a structure in which a negative electrode active material layer is formed on a negative electrode current collector. The negative electrode current collector is not particularly limited as long as it does not cause chemical change in a battery and has high conductivity, and for example, copper, stainless steel, aluminum, nickel, titanium, calcined carbon, copper or stainless steel that is surface-treated with carbon, nickel, titanium, silver, etc., an aluminum-cadmium alloy, etc. may be used.

The negative electrode active material layer includes a negative electrode active material, a negative electrode conductive material, and a negative electrode binder. As the negative electrode active material, compounds capable of reversibly intercalating and deintercalating lithium, generally used in the art, may be used, and the type is not particularly limited. Particular examples of the negative electrode active material may be a carbon material including artificial graphite, natural graphite, a graphitized carbon fiber, amorphous carbon, etc.; a silicon-based material including Si, a Si-Me alloy (where, Me is one or more selected from the group consisting of Al, Sn, Mg, Cu, Fe, Pb, Zn, Mn, Cr, Ti, and Ni), SiOy (where, 0<y<2), a Si-C composite, etc.; a lithium metal thin film; a metal material capable of alloying with lithium such as Sn, Al, etc., and any one thereof or a mixture of two or more thereof may be used.

The negative electrode conductive material may be used to provide conductivity to the negative electrode, and any material that does not cause chemical change and conducts electrons may be used in the battery without particular limitation. The negative electrode conductive material may be the same as the positive electrode conductive material.

The negative electrode binder serves to improve binding between negative electrode active material particles and adhesion between the negative electrode active material and the negative electrode current collector. The negative electrode binder may be the same as the positive electrode binder.

Meanwhile, the negative electrode may be prepared according to a general method of preparing an electrode. For example, the negative electrode active material, and the negative electrode binder and/or negative electrode conductive material may be mixed in a negative electrode slurry solvent to prepare a negative electrode slurry, and the negative electrode slurry may be applied onto the negative electrode current collector, and then dried and pressed to prepare the negative electrode current collector in which the negative electrode active material layer 212 is formed.

The negative electrode slurry solvent may be solvents generally used in the relevant art, and for example, dimethyl sulfoxide (DMSO), isopropyl alcohol, N-methylpyrrolidone (NMP), acetone, water, etc. may be used alone or as a mixture of two or more thereof.

### Separator

The separator 220 according to the present invention may be positioned between the electrodes, and may provide a movement path of lithium ions. Any separator generally used in a secondary battery may be used without particular limitation. In particular, as the separator, a porous polymer film, for example, a porous polymer film prepared with a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof, may be used. In addition, a general porous non-woven fabric, for example, a non-woven fabric made of glass fiber with high melting point, polyethylene terephthalate fiber, etc. may also be used. Furthermore, a coated separator including a ceramic component or a polymer material may be used in order to secure heat resistance or mechanical strength.

### Electrolyte

The pouch-type secondary battery 100 according to the present invention further includes a liquid electrolyte (not shown) injected into the battery case 400. The liquid electrolyte serves to move lithium ions generated by electrochemical reaction of an electrode, during charging and discharging of a secondary battery, and may include a nonaqueous organic electrolyte that is a mixture of a lithium salt and organic solvents.

Any organic solvent may be used as the organic solvent, without particular limitation, as long as it may function as a medium through which ions involved in an electrochemical reaction of the battery may move. In particular, as the organic solvent, an ester-based solvent including methyl acetate, ethyl acetate, γ-butyrolactone, ε-caprolactone, etc.; an ether-based solvent including dibutyl ether, tetrahydrofuran, or the like.; a ketone-based solvent including cyclohexanone, etc.; an aromatic hydrocarbon-based solvent including benzene, fluorobenzene, etc.; a carbonate-based solvent including dimethylcarbonate (DMC), diethylcarbonate (DEC), ethylmethylcarbonate (EMC), ethylene carbonate (EC), propylene carbonate (PC), etc.; an alcohol-based solvent including ethylalcohol, isopropyl alcohol, etc. may be used. Among these, a carbonate-based solvent is preferred, and a mixture of a cyclic carbonate (for example, ethylene carbonate, propylene carbonate, or the like) having high ionic conductivity and high permittivity capable of increasing charging and discharging performance of the battery, and a low-viscosity linear carbonate-based compound (for example, ethylmethyl carbonate, dimethyl carbonate, diethyl carbonate, or the like) is more preferred.

Any compound capable of providing lithium ions that are used in a secondary battery may be used for the lithium salt without particular limitation. In particular, for the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN (C₂F₅SO₂)₂, LiN(CF₃SO₂)₂, LiCl, LiI, LiB(C₂O₄)₂, or the like may be used. The lithium salt may be used in a concentration range of 0.1 M to 2.0 M. When the concentration of lithium salt falls within the above ranges, the electrolyte may have appropriate conductivity and viscosity, and therefore, excellent performance of the electrolyte may be exhibited, and lithium ions may move effectively.

### <Preparation Method of Pouch-Type Secondary Battery>

The preparation method of the pouch-type secondary battery 100 according to the present invention includes stacking a plurality of electrodes 210 and a plurality of separators 220 alternately, such that a first electrolyte sheet 230_1 is stacked on at least one electrode of the plurality of electrodes 210, to prepare an electrode assembly 200; fixing the electrode assembly 200 by an electrolyte band 300; and adding the electrode assembly 200 fixed by the electrolyte band 300 and a liquid electrolyte (not shown) to a battery case 400 and sealing the battery case to obtain an inactive pouch-type secondary battery. At this time, the first electrolyte sheet 230_1 includes a first polymer electrolyte.

### Preparing Electrode Assembly

Meanwhile, the preparing of the electrode assembly 200 may be the stacking of the electrode 210 and the separator 220 alternately, and when the electrode 210 and the separator 220 are stacked, the first electrolyte sheet 230_1 may be stacked therebetween.

The preparing of the electrode assembly 200 according to the present invention may include stacking a second electrolyte sheet 230_2 on at least one electrode of the plurality of electrodes, and the second electrolyte sheet 230_2 may include a second polymer electrolyte. For example, when the electrode 210 and the separator 220 are stacked, the first electrolyte sheet 230_1 and/or the second electrolyte sheet 230_2 may be stacked.

Each of the first electrolyte sheet 230_1 and the electrolyte band 300 includes the first polymer electrolyte, and the second electrolyte sheet 230_2 includes the second polymer electrolyte. In particular, the appropriate numbers of the first electrolyte sheet and the second electrolyte sheet may be disposed between the electrode and the separator, as needed, and since the first electrolyte sheet may be converted to liquid during charging and discharging of a secondary battery, and the second electrolyte sheet may be converted to liquid during formation of the secondary battery, to thereby replenish with the liquid electrolyte, the positions to which the first electrolyte sheet and the second electrolyte sheet are disposed and the numbers thereof may be adjusted according to the type of the electrode to be constituted, the type of electrolyte, etc.

Since the first polymer electrolyte and the second polymer electrolyte are the same as previously described, detailed descriptions thereof will be omitted.

In example embodiments, the preparing of the electrode assembly 200 may include preparing each of the first electrolyte sheet 230_1 and the second electrolyte sheet 230_2, and as long as the first polymer electrolyte and the second polymer electrolyte are included as the components, a general molding method may be applied to prepare the electrolyte sheet 230.

### Fixing the Electrode Assembly by Electrolyte Band

The preparation method of the pouch-type secondary battery 100 according to the present invention includes the fixing of the electrode assembly 200 by the electrolyte band 300. In particular, in order to stably maintain the stacked structure of the electrode assembly 200, an outer surface of the electrode assembly 200 may be surrounded by the electrolyte band 300.

In example embodiments, the fixing of the electrode assembly 200 by the electrolyte band 300 may include disposing the electrolyte band 300 on end portions of one and the other sides and the center of the electrode assembly 200 such that the electrolyte band is disposed in a direction perpendicular to a direction in which an electrode lead protrudes, and the electrolyte band may be disposed in the number of at least one, two, or three, and may preferably be disposed in the number of six or less.

Meanwhile, the electrolyte band may include the first polymer electrolyte as a component of the electrolyte band, as previously described, and a general molding method may be applied, but in case of molding in the form of a band, since it is preferred to provide elasticity, an additive capable of providing the elasticity may be added, or the first polymer electrolyte having elasticity at room temperature may be selected.

### Obtaining Inactive Pouch-Type Secondary Battery

The preparation method of the pouch-type secondary battery 100 according to the present invention includes the adding of the electrode assembly 200, fixed by the electrolyte band 300; and the liquid electrolyte to the battery case 400 and the sealing of the battery case to obtain the inactive pouch-type secondary battery.

In particular, the electrode assembly 200 fixed by the electrolyte band 300 may be accommodated inside the battery case 400.

Meanwhile, after the electrode assembly 200 is accommodated in the battery case 400, the liquid electrolyte may be injected into the battery case 400. The injected liquid electrolyte may penetrate into pores of the electrode assembly 200. At this time, without performing an additional process for impregnating the electrode assembly 200 with the liquid electrolyte, impregnation of the electrode assembly 200 to the electrolyte may be improved through the first electrolyte sheet 230_1, the second electrolyte sheet 230_2, and the electrolyte band 300.

### Activating Inactive Pouch-Type Secondary Battery

In example embodiments, the preparation method of the pouch-type secondary battery 100 may further include activating the inactive pouch-type secondary battery 100, and the activating may be to perform charging and discharging on the pouch-type secondary battery 100 at 45 °C to 59 °C. In example embodiments, the temperature at which the activating is performed may be 50 °C to 59 °C.

In addition, the activating may include melting the second electrolyte sheet 230_2 in the battery case 400. That is, the melting point of the second polymer electrolyte included in the second electrolyte sheet 230_2 is lower than the process temperature in the activating. Through this, the electrode assembly 200 with excellent electrolyte impregnation may be achieved.

In example embodiments, the activating may refer to repeating charging and discharging to a particular voltage at a particular rate capability, and in this process, an aging process may be performed between the charging and discharging, and such charging/discharging and aging may be applied without particular limitation as long as these are used in the relevant art, but in the activating, a process of temperature rise to the temperature range previously described needs to be included during the charging/discharging and the aging. Through this, a process of impregnating the second polymer electrolyte into the electrode assembly may be performed.

### MODE FOR CARRYING OUT THE INVENTION

Hereinafter, examples of the present invention will be described in detail so that those skilled in the art may easily carry out the present invention. However, the present invention may be implemented in several different forms, and is not limited to the examples to be described herein.

### Example 1: Preparation of Secondary Battery

### (1) Preparation of First Electrolyte Sheet

Lithium bis(trifluoromethanesulfonyl)imide (LiTFSI with 99.9% purity) stored at 110 °C for 24 hours or more and polyethylene oxide (PEO) stored at 45 °C for 48 hours in a dry room were prepared. Thereafter, polyethylene oxide and LiTFSI were mixed in a weight ratio of 50:1, agitated for 12 hours to prepare a first polymer electrolyte.

Thereafter, casting of the first polymer electrolyte was performed on a glass container to prepare in a film form, dried in a vacuum oven at 50 °C for 24 hours to prepare a first electrolyte sheet with a melting point of about 60 °C.

### (2) Preparation of Electrolyte Band

An electrolyte band was prepared in the same method as that of the first electrolyte sheet, except that the first polymer electrolyte was prepared in a band shape through an injection method.

### (3) Preparation of Electrode Assembly

An electrode, a separator, and the first electrolyte sheet prepared as above were stacked, such that the first electrolyte sheet was inserted between the electrode and the separator, to prepare an electrode assembly. Thereafter, an electrode lead was coupled to the electrode assembly.

### (4) Preparation of Secondary Battery

Three band-type polymer electrolytes were disposed at regular intervals on an outer surface of the prepared electrode assembly.

Thereafter, the electrode assembly was accommodated in a battery case, and a liquid electrolyte in which ethylene carbonate (EC) and ethylmethyl carbonate (EMC) were mixed in a volume ratio of 30:70, and then LiPF₆ was dissolved to have 1.0 M was injected, and the battery case was sealed. Thereafter, a formation process was performed on the electrode assembly at 45 °C to 59 °C, and then additional aging was performed for 3 days. Finally, a degas process was performed to prepare a pouch-type secondary battery.

### Example 2

A pouch-type secondary battery was prepared in the same method as that of Example 1, except that the first polymer electrolyte was prepared in the following.

Polyethylene oxide (PEO) and aluminum oxide (Al₂O₃) were mixed in a mass ratio of 9:1 in a lithium salt (LiTFSI), and agitated for 12 hours to prepare the first polymer electrolyte with a melting point of about 73 °C.

### Example 3

A pouch-type secondary battery was prepared in the same method, except that a second electrolyte sheet was prepared, and an electrode, a separator, and the first electrolyte sheet and the second electrolyte sheet prepared as above were stacked, such that the first electrolyte sheet was inserted in one side of the separator, and the second electrolyte sheet was inserted in the other side, to prepare the electrode assembly.

At this time, the second electrolyte sheet was prepared in the following method. In particular, polycarboxylate ether (PCE) and polyethylene oxide (PEO), dried for 24 hours in a dry room, were prepared. Thereafter, a mixture of polycarboxylate ether (PCE) and polyethylene oxide (PEO) in a mass ratio of 9:1 was added in an amount of 10 wt% to a mixture of lithium bis(trifluoromethanesulfonyl)imide (LiTFSI with 99.9% purity) and succinonitrile (SN), and then agitated at 70 °C to prepare a second polymer electrolyte.

Thereafter, casting of the second polymer electrolyte was performed on a glass container to prepare in a film form, dried in a vacuum oven at 35 °C for 24 hours to prepare the second electrolyte sheet with a melting point of about 42 °C.

### Example 4

A pouch-type secondary battery was prepared in the same method as that of Example 3, except that the second polymer electrolyte was prepared in the following.

Polycarboxylate ether (PCE) and polyvinylpyrrolidone (PVP), dried for 24 hours in a dry room, were prepared. Thereafter, a mixture of polycarboxylate ether (PCE) and polyvinylpyrrolidone (PVP) in a mass ratio of 9:1 was added in an amount of 10 wt% to a mixture of lithium bis(trifluoromethanesulfonyl)imide (LiTFSI with 99.9% purity) and succinonitrile (SN), and then agitated at 70 °C to prepare a second polymer electrolyte with a melting point of about 52 °C.

### Comparative Example 1

A pouch-type secondary battery was prepared in the same method as that of Example 1, except that the first electrolyte sheet, the second electrolyte sheet, and the electrolyte band were not applied.

### Comparative Example 2

A pouch-type secondary battery was prepared in the same method as that of Example 1, except that the first electrolyte sheet was positioned between an electrode current collector and an electrode active material layer of an electrode, not between the electrode and the separator, and the electrolyte band was not applied.

### Experimental Example 1: Impregnation Evaluation

Each of the pouch-type secondary batteries according to Examples 1 to 4 and Comparative Examples 1 to 2 was disassembled to evaluate the electrolyte impregnation. In particular, with 1 C-rate charging and discharging as 1 cycle, each of the pouch-type secondary batteries after 100 cycles was disassembled, and the battery case was opened to evaluate the level of impregnation in the electrode.

In Table 1 below, the "∘" mark means good, which means that an electrolyte impregnation portion, compared to the total surface of the electrode and the separator, accounted for 80% or more. The "Δ" mark means moderate, which means that the electrolyte impregnation portion, compared to the total surface of the electrode and the separator, accounted for 50% to 0%.

### Experimental Example 2: Delamination Evaluation

After the pouch-type secondary batteries according to Examples 1 to 4 and Comparative Examples 1 to 2 were disassembled, whether electrode delamination occurred was checked, and the electrode delamination was evaluated relative to the number of surfaces on which the delamination occurred, and the results were listed in Table 1 below. In particular, if there is no electrode delamination, "∘" was marked, and if the degree of electrode delamination was less than 50%, "Δ" was marked.

### Experimental Example 3: Evaluation on Electrolyte Decrease during Use of Pouch-type Secondary Battery

100 cycles of charging and discharging were performed on each of the pouch-type secondary batteries, according to Examples 1 to 4 and Comparative Examples 1 to 2, with 1 C-rate charging and discharging as 1 cycle, then the pouch-type secondary batteries were disassembled, and the battery cases were opened. Through the comparison between before and after charging and discharging, the amount of electrolyte solution escaping due to gas may be observed. Through the relative comparison for weight ratio, performance according to decrease of electrolyte was evaluated, and the results were listed in Table 1 below.

In Table 1 below, the "o" mark means 90% or more on the basis of remaining electrolyte in the pouch-type secondary battery prepared according to Example 1, and the "X" mark means less than 80% on the basis of the result of Example 1.

**[Table 1]**

| | Example 1 | Example 2 | Example 3 | Example 4 | Comparative Example 1 | Comparative Example 2 |
|---|---|---|---|---|---|---|
| Impregnation evaluation | ○ | ○ | ○ | ○ | Δ | Δ |
| Delamination evaluation | ○ | ○ | ○ | ○ | Δ | Δ |
| Remaining electrolyte evaluation | ○ | ○ | ○ | ○ | X | X |

Referring to Table 1 above, it can be seen that the values of impregnation for the electrolytes in the electrode assemblies applied according to Examples 1 to 4 were higher than the values of impregnation for the electrolytes in the electrode assemblies applied according to Comparative Examples 1 and 2. That is, it appears to be because the first electrolyte sheet or the second electrolyte sheet, added in addition to the liquid electrolyte, melted during a process of preparing the pouch-type secondary battery, thereby improving the impregnation of the electrode assembly for the electrolyte.

In addition, it can be seen that the delamination results of electrode active material layers for the electrode current collectors, according to Examples 1 to 4, were better than that of Comparative Example 2. It appears to be because the second electrolyte sheet according to Comparative Example 2 was positioned between an electrode active material layer and an electrode separator layer, thereby deteriorating adhesion of the electrode active material layer.

Furthermore, it can be seen that the amounts of remaining electrolytes in the pouch-type secondary batteries prepared according to Examples 1 to 4 were better than the amounts of remaining electrolytes in the pouch-type secondary batteries prepared according to Comparative Examples 1 and 2, which appears to be because the first electrolyte sheet and the electrolyte band, as well as the second electrolyte sheet, partially melted, and thus the amount of the electrolyte was replenished.

### <Description of the Symbols>

100: Pouch-type secondary battery
200: Electrode assembly
210: Electrode
211: Electrode lead
220: Separator
230: Electrolyte sheet
230_1: First electrolyte sheet
230_2: Second electrolyte sheet
300: Electrolyte band
400: Battery case

## Claims

1. A pouch-type secondary battery comprising:
an electrode assembly having a structure in which a plurality of electrodes and a plurality of separators are alternately stacked, and including a first electrolyte sheet;
an electrolyte band surrounding an outer surface of the electrode assembly such that the stacked structure is fixed; and
a battery case accommodating the electrode assembly,
wherein the electrolyte sheet is disposed on a surface of at least one of the plurality of electrodes, and
each of the first electrolyte sheet and the electrolyte band includes a first polymer electrolyte.

2. The pouch-type secondary battery of claim 1, wherein the first polymer electrolyte has a melting point of 60 °C to 73 ° C.

3. The pouch-type secondary battery of claim 1, wherein the first polymer electrolyte comprises polyethylene oxide.

4. The pouch-type secondary battery of claim 3, wherein the first polymer electrolyte further comprises one or more selected from the group consisting of lithium bis(trifluoromethanesulfonyl)imide and aluminum oxide.

5. The pouch-type secondary battery of claim 1, wherein the electrode assembly further comprises a second electrolyte sheet, and
the second electrolyte sheet comprises a second polymer electrolyte.

6. The pouch-type secondary battery of claim 5, wherein the second polymer electrolyte has a melting point of 35 °C to 55 ° C.

7. The pouch-type secondary battery of claim 5, wherein the second polymer electrolyte comprises:
a main component including succinonitrile; and
a minor component including one or more selected from the group consisting of polycarboxylate ether, polyethylene oxide, polyvinylpyrrolidone, polyethylene carbonate, and polyacrylonitrile.

8. The pouch-type secondary battery of claim 1, wherein two or more of the electrolyte bands are included, and the two or more electrolyte bands are disposed apart from each other at regular intervals.

9. The pouch-type secondary battery of claim 1, wherein each of the plurality of electrodes comprises an electrode current collector and an electrode active material layer applied onto the electrode current collector, and
the first electrolyte sheet is positioned on the electrode active material layer.

10. A preparation method of a pouch-type secondary battery, comprising:
stacking a plurality of electrodes and a plurality of separators alternately, such that a first electrolyte sheet is stacked on at least one electrode of the plurality of electrodes, to prepare an electrode assembly;
fixing the electrode assembly by an electrolyte band; and
adding the electrode assembly, fixed by the electrolyte band, and an electrolyte to a battery case and sealing the battery case to obtain an inactive pouch-type secondary battery,
wherein each of the first electrolyte sheet and the electrolyte band includes a first polymer electrolyte.

11. The preparation method of claim 10, wherein the first polymer electrolyte has a melting point of 60 °C to 73 °C.

12. The preparation method of claim 10, wherein the preparing of the electrode assembly comprises stacking a second electrolyte sheet on at least one electrode of the plurality of electrodes, and
the second electrolyte sheet comprises a second polymer electrolyte.

13. The preparation method of claim 12, wherein the second polymer electrolyte has a melting point of 35 °C to 55 °C.

14. The preparation method of claim 12, further comprising activating the inactive pouch-type secondary battery,
wherein the activating of the inactive pouch-type secondary battery is to perform charging and discharging of the pouch-type secondary battery at 45 °C to 59 °C.

15. The preparation method of claim 14, wherein the second electrolyte sheet melts during the activating.
